# EUROPEAN PATENT SPECIFICATION

(11) **EP 1 040 314 B1**
(45) Date of publication and mention of the grant of the patent: **16.04.2003**
(21) Application number: 98959786.9
(22) Date of filing: 15.12.1998
(51) Int. Cl.: G01B 3/40, G01B 5/08, G01B 5/20

(54) **INSTRUMENT FOR MEASURING THREAD PITCH DIAMETER**
INSTRUMENT ZUM MESSEN DES GEWINDEDURCHMESSERS
INSTRUMENT PERMETTANT DE MESURER LE DIAMETRE DU PAS DE FILETAGE

(30) Priority: 15.12.1997 DK 145197
(43) Date of publication of application: 04.10.2000
(73) Proprietor: Clarke, Gordon, 6040 Egtved (DK)
(72) Inventor: Clarke, Gordon, 6040 Egtved (DK)
(74) Representative: Nielsen, Leif
(86) International application number: DK9800553
(87) International publication number: WO99031458

(56) References cited:
- EP-A2- 0 508 451
- US-A- 2 826 822
- US-A- 3 090 126
- US-A- 4 947 555
- US-A- 5 317 809

## Description

The present invention relates to a measuring system for measurement of thread pitch diameters. It is deemed superfluous to describe in detail why such measurements can be extremely important in practice, as this will be very well known to any expert in this field.

In the prior art several such measuring systems have been suggested and realized, based on the use of calipers or micrometers fitted with attachments for contacting the threads of either external or internal threads, with excellent measuring results. However, in order to achieve excellent results it has been a requirement that the said attachments be rather closely adapted to the type of the relevant thread, primarily to the flank angle and the pitch of the thread, whereby it has been a simple necessity that the relevant attachments should be adapted accordingly. This has resulted in long rows of different attachments for the measuring of various threads, each adapted to the specific type of the thread and with respect to both the flank angle and the pitch thereof.

For conditioning accurate measurements this leads to a very high number of different attachments, and it has been endeavoured to reduce this number somewhat by replacing some attachments with correction tables providing correction values for measurements made with non-optimal, yet still usable attachments. This, however, is difficult to work with in practice, and the present invention aims at the enabling of direct measurement readings based on the use of a drastically reduced number of different attachments, though in some cases with additional simple use of a fixed calibration value.

Basically, according to the state of the art, there are employed two different types of attachments for the relevant measurings, one referred to as "measuring blades", the other as "measuring wires". These concepts can be explained as follows:

### 1. Measuring blades:

The attachments consist of thin plate members basically configured with the same length profile as the thread to be measured, i.e. appearing as toothed blades to be placed across the thread windings, against diametrically opposite line areas of the thread, so as to ideally match fully with the thread with respect to the character, flank angle and pitch thereof. The opposite blades, of course, should be mutually staggered by one half of the actual thread pitch, such that a tooth at one side can intrude into the thread opposite to a crest portion of the thread as contacted by a bottom portion between two teeth of the opposed measuring blade. It will be readily understood that the measured distance between the measuring blades will then express the thread pitch diameter, given that the measuring instrument is adjusted to show zero when the opposed blades are brought fully together - or otherwise corrected to the extent this showing deviates from zero.

The indentation of the measuring blades, of course, should be provided with an extreme degree of accuracy, also if reduced to a required minimum of one tooth at one side and two teeth at the opposite side. A relevant example is disclosed in DE-B-1,045,669, which confirms that the indentation of the measuring blades should correspond exactly to the cross profile of the thread, i.e. in having the same flank angle and pitch as the thread to be measured, with the indentations having straight flanks and otherwise being individually adapted to any of a wide variety of specific thread profiles.

### 2. Measuring wires:

For the measuring of external threads, another type of attachments has been developed, viz. the so-called "measuring wires". Short, straight wire pieces are arranged on opposed carrier plates in positions cross sectionally corresponding to the locations of the teeth of the said measuring blades, i.e. with one wire at one carrier plate and two parallel wires on the opposite carrier plate. The wires, calibrated with a perfect cylindrical shape and with relevant different diameters and mutual spacings, are laid out such that when they are brought into engagement with the respective thread grooves they will contact the flanks defining these grooves at points very closely to the factual pitch diameter of the thread, each wire contacting both of the adjacent thread flanks defining the grooves.

In general it is found that this system is the better one, though also more expensive. It can be used with different types of threads, but it is still required to extensively adapt the attachments to the diameter and the pitch of the thread. For example, relatively thick measuring wires may be used for large thread pitches, while in connection with smaller pitches it will be necessary to use smaller wire diameters in order to still ensure a correct engagement because of the changed direction between the thread windings and the measuring wires. This again may lead to the use of correction tables based on interpolations between different wire diameters and positionings, in order to reduce the high number of ideal measuring attachments, but such a solution will still be of secondary interest compared with a method enabling a true or more easily derived determination of the pitch diameter by a mere direct measuring thereof.

It should be mentioned that in connection with micrometers it is known to make use of attachments imitating the discussed known techniques, using a "notch and point" principle, viz. a pointed cone opposite to a notch between only two teeth. However, also here both the cone and the notch part should match the flank angle of the thread to be measured.

EP-A-0 508 451 describes a gauge for measuring thread diameters. This gauge includes two opposed measuring heads, one carrying a single protrusion, the other a pair of protrusions for engaging with the thread groove and ridge, respectively. The flank engaging corners of said protrusions are rounded with the radius of a circle ideally touching the opposed thread flanks midways between the top and the bottom of the nominal thread profile and their length dimension is larger than the diameter of said circle.

### The invention:

With the invention it has been realized that it is possible to combine the two discussed measuring systems with some modifications, to the effect of enabling the relevant measurements with a surprisingly small number of different attachments. The invention is based at the use of measuring blades, but instead of these having tooth edges with straight flanks they are configures with protrusions, the outer ends of which are generally located and shaped as though they represented a cross section of a set of relevant measuring wires. This alone could well be advantageous over the prior art, but it has also been recognized that this arrangement opens up for further and very important possibilities:

The measuring wire principle is based on the use of calibrated and perfectly cylindrical wires, but in fact only a small fraction of their circumference will ever get in touch with the thread flanks. When the cross section of a round wire is partly imitated by a cut contour of a projection on a thin blade structure, it is then, with modern forming or cutting equipment, relatively easy to produce a contour, which is a correct imitation at the relevant place or places, while outside this or these places there will be no need to imitate the full diameter or radius of a round wire, as these portions will not be operative anyway.

Accordingly to the invention, this simple finding may give rise to a very important modification, viz. in particular that the width of the blade edge protrusions imitating the "two parallel wires" attachment of the measuring wire system may be significantly reduced. In this connection, the invention constitutes a break even with the measuring wire philosophy, in that it will no longer be prescribed that the two "parallel wires" should, each, be brought into touch with the flanks of both of the thread flanks, between which they are inserted. According to the invention it is fully sufficient that such two wires or rather curved parts of otherwise non-circular protrusion edges are brought into touch with the opposite flanks of one thread tooth, while an opposite part contacts both sides of the groove between two opposite thread teeth, without each of the two parallel edged contacting both the intermediate thread tooth and the respective neighbouring teeth thereof.

Thus, each of the two "parallel wire" protrusions of the measuring blade, in the following designated the "U-blade" may have its width noticeably smaller than corresponding to the full width of a cylindrical wire, this in turn enabling an intrusion of the U-blade over a thread tooth with increased depth, i.e. to a measuring abutment with the opposite flanks of the engaged thread tooth widely irrespectively of the flank angle of the thread. In a corresponding manner, the blade imitating the single wire attachment, in the following designated the "I-blade", may have its protrusion as broad as desirable for a suitable measuring wire and yet, because an outer, rounded top portion can be cut away, be able to penetrate deeper into the thread grooved, thus also more independently of the flank angle.

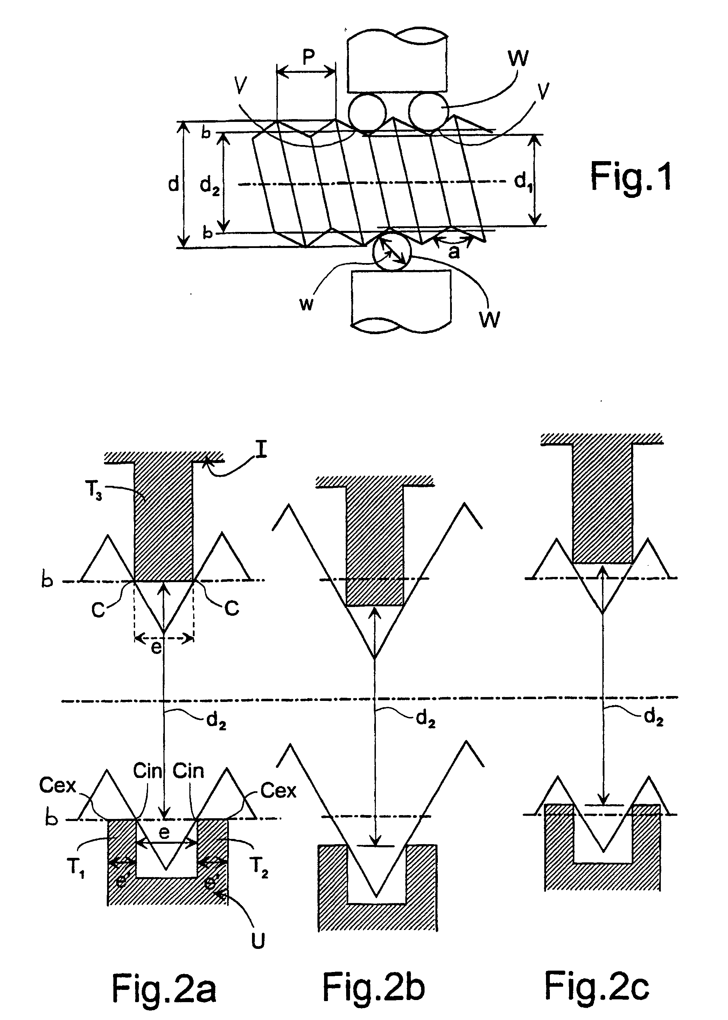

The said possibility of the protrusions to penetrate deeper over or in he thread teeth or grooves, respectively, also accounts for a very important result with respect to a pronounced independency of the pitch of the thread, this being illustrated in Fig. 2.

For comparison, reference is first made to Fig. 1, which illustrates the measuring wire principle. The thread shown has an outer diameter d, an inner diameter d₁ and a pitch diameter d₂. The pitch of the thread is P and the flank angle a. measuring wires W with diameter w are held against the thread, two at one side and one at the other side. For a fully correct measurement of d₂, wire attachments should be used wherein the wires W touch the flanks at points V located at the intersections between the flanks and the lines b representing the pitch diameter d₂. It follows that the wires W and the spacing between the double wires should be carefully adapted to a row of parameters, viz. type, pitch and flank angle of the thread. Moreover it should be considered that what is measured directly is the distance M between the opposed outer sides of the wires W, hence the need for correction tables.

Fig. 2a)-c) illustrate the principle of the invention in an equivalent manner, showing the (hatched) protrusions T1 and T2 of a U-blade U and T3 of an I-blade I inserted in different threads. The protrusions are here shown with a rectangular configuration, which is sufficient for showing basic concept. The top corners of projection T3 are designated C while those of the projections T1 and T2 are designated C₂ₙ and Cₑₓ for the inner and outer corners, respectively. The width of protrusion I is e, which is also the distance between the inner corners of protrusions T1 and T2. The width e' of each of the latter is smaller than e, e.g. e/2.

An ideal measuring situation is shown in Fig. 2a. The corners C engage both of the adjacent thread flanks just at the line b, and so do the corners Cᵢₙ of the U-blade. Once calibrated to zero when the tops of the protrusions are aligned, the measuring instrument will now measure the pitch diameter d₂ directly.

Now, if the thread pitch is somewhat bigger as shown in Fig. 2b it is easily seen that the protrusion T3 will "sink" deeper into the thread groove, beyond the line b, but it will also be noticed that the U-blade can no longer reach the line b, as it rides on the thread top somewhat outwardly spaced from the associated line b. However, given the geometry discussed, it will be noted that while both of the blades have now moved downwardly in the Figure, the spacing d2 between them is the same as in Fig. 2a, i.e. the instrument is still measuring correct. Correspondingly, if the pitch is smaller as shown in Fig. 2c, the T3 protrusion cannot reach its b-line, but then, in return, the U-blade can intrude still further, and again the measuring result will be correct. It will be noted that this further intrusion is made possible thanks to the relatively small width of the T1 and T2 protrusions.

Exactly the same will happen if the flank angle is considered variable. Again, the measurements will be correct as long as the blade attachments are able, physically, to cooperate as required with the threads to be measured. In practice it has been found sufficient to operate with two different blade sets for covering the pitch range of 1-5 mm, this being further discussed below.

It should be mentioned already here that the invention in addition to its general and significant advantages also provides for an important breakthrough with respect to the measuring of internal threads in a simple manner. When the blades are made with a small blade thickness they will not have to be adjusted or rotatable to a position in which they extend perpendicularly to the thread windings, i.e. they can be rigidly held on the carrier jaws of the measuring instrument and positioned in the axial direction of the threaded bore. They may necessitate a general zero calibration of the measuring instrument, but the entire arrangement is much simpler than conventional measuring systems for this particular use.

In connection with the measuring wire method it was mentioned that a requirement would be to operate with correction tables in order to take into account the thicknesses of the employed wires. In the present connection, the "wire imitation" as used in the blades for smaller and larger pitch, respectively, also refers to respective smaller and larger diameters, but the use of a correction table can be easily obviated by a relevant adaptation of the heights of the respective blade protrusions.

In the following the invention is described in more detail with reference to the drawing, in which:
Fig. 1 illustrates the measuring wire principle as already discussed;
Fig. 2a-c illustrate a basic principle of the invention, also as already discussed,
Fig. 3 is a plan view of a caliper equiped with attachment holders,
Fig. 4 is a corresponding view of the said holders prior to mounting on the caliper,
Fig. 5 is a perspective exploded view of opposed attachments according to the invention,
Fig. 6 is a sectional view of an assembled attachment,
Fig. 7 is a side view of attachments for measuring internal threads, and
Figs. 8 and 9 are detailed plan views of the protrusions of opposed measuring blades.

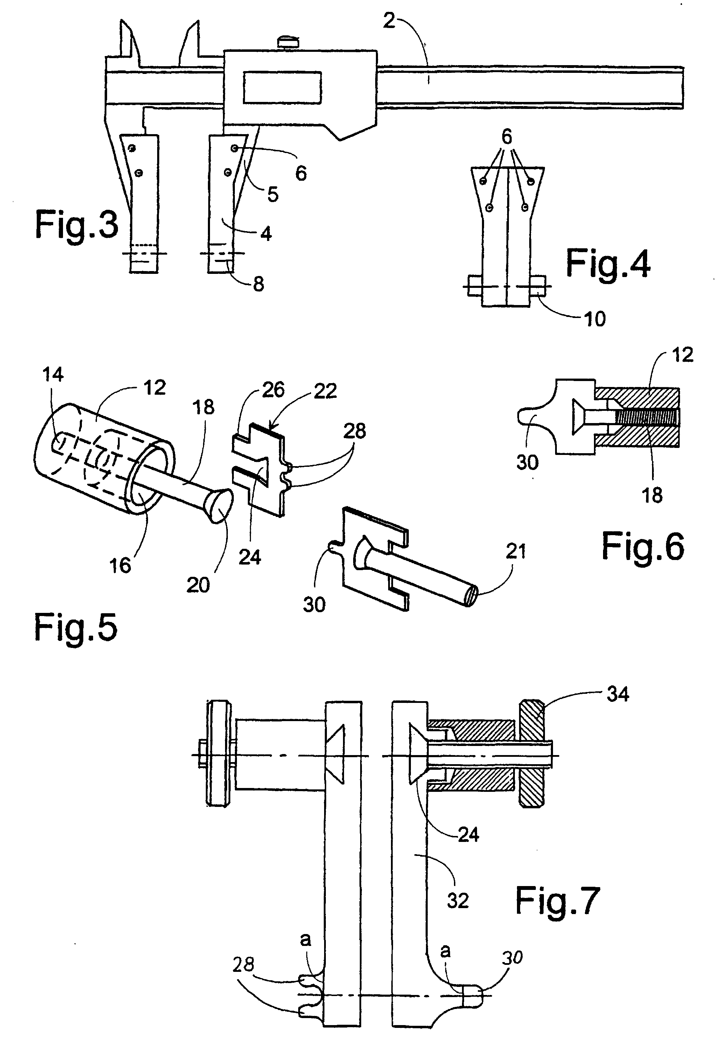

In Fig. 3 a caliper 2 is shown, the jaws of which are used as carriers for respective attachment holders 4 secured to the jaws by means of clamp screws 6. The holders 4 project beyond the outer ends of the jaws 5 and are in this outer region provided with aligned throughbores 8. Before and during their mounting on the jaws 5, the holders 4 are held together as shown in Fig. 4, with a removable alignment rod 10 inserted through the bores 8. Once the mounting is completed this rod 10 is retracted from the bores.

Thereafter the bores 8 are used for receiving measuring attachments as illustrated in Fig. 5. Each attachment comprises a holder bushing 12 fitting into the bore 8 and having a central passage comprising a rear, threaded screw hole 14 and a foremost cylindrical recess 16. The hole 14 holds a countersunk screw 18 having an outer, kerbless head 20 with triangular cross section, while at its rear end the screw 18 could be provided with a kerb 22 or a polygonal hole for receiving a screw spanner. Each attachment further comprises a measuring blade 22 having a recess 24 corresponding to the length section of the head end of the screw 18 and a rear portion 26 fitting into the recess 16 of the bushing 12. At its front end the blade 22 is shaped with measuring protrusions 28 to be discussed in more detail below. At one side there are provided two neighbouring protrusions 28, while at the other side there is but one protrusion 30 which, after the mounting on the caliper jaws, will be lined up exactly midways between the protrusions 28.

The respective blades 22 are introduced sideways over the screw head portions, and the bushing is turned so as to retract the blades into a precisely centered position on the front ends of the bushings 12, according to Fig. 6. The screwing home of the screw 18 is possible due to frictional engagement with the recess 24, whereby the kerb 22 can be avoided.

The bushings 12 are insertable into the bores 8 of the jaws 4 so as to be rotatable therein, held e.g. by a springloaded clamping ball.

For the measurement of internal thread diameters a modified, but similar arrangement may be used as shown in Fig. 7, where the measuring blades comprise laterally projecting connector strip portions 32 provided with the measuring protrusions 28 or 30 at an outer end and with the screw accommodating recess 24 at an inner end. For sufficient stability the blades may need to be thicker than desirable for the thickness of the measuring protrusions 28 and 30, in particular in view of the fact that these blades are not intended to be turnable according to the pitch of the thread to be measured, and the said protrusions, therefore, may be worked down to a reduced thickness outside a bottom line a.

Inasfar as these attachments are not desired to be rotatable about the central axis of their associated bushings 12, their screws 18 are preferably provided with rearmost thumb nuts 34 for clamping against the rear sides of the jaws 4 so as to directly lock the bushings against rotation. This, of course, may also be achieved in other and elementary manners.

Of still higher importance is the contour shape of the protrusions 28 and 30. It is acknowledged that an ideal shape will correspond to the cross sectional shape of the measuring wires according to Fig. 1, i.e. based on the said "notch and point" principle, where the thread engaging parts are rounded so as to fit in the thread groove by contacting the neighbouring flanks of the thread just at the pitch diameter thereof. For any pitch and flank angle, the ideal size of the thread can be calculated by simple trigonometrical considerations. Of course, a given set of wires may be usable for slightly deviating pitch and flank angle, as long as the measuring results have acceptable tolerances, but already physical circumstances prevent an extended use of the wires, as for one thing - as already mentioned - the wires cannot intrude in the thread groove deeper than to their contact with the opposed flanks, and for another thing they cannot either intrude deeper than corresponding to their mounting base engaging the crests of the thread. It has been found fully natural, therefore, to operate with a wide range of optimized threads.

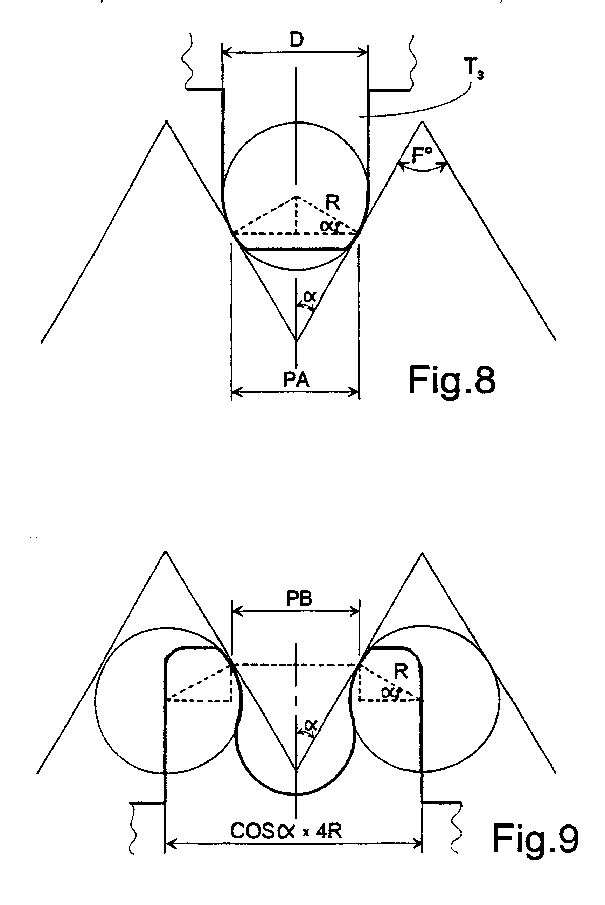

In connection with the invention, however, based on the principle according to Fig. 2 and as further illustrated in Figs. 8 and 9 it has been found that it is possible to imitate a relevant wire diameter at the corners C and Cᵢₙ of Fig. 2. When measuring blade protrusions are used, it is also possible to enable a deeper intrusion of the protrusions than in case of wires, without contact problems at the crests of the thread. Such provisions have not really been considered in the prior art, but they are actual here, because it is a major contribution of the invention that it has been found, surprisingly, that a given set of measuring attachments made accordingly will in fact be practically usable for measurements over a much wider range of flank angles and thread pitches than practised so far.

In practice, the prevailing thread pitch range is 1-5 mm, and with the invention it has been found that it is possible to cover this range by only two sets of attachments. It has been found as a general rule that a "wire radius" or corner curvature, R, adapted ideally to a given pitch P and flank angle F, will in fact be usable for measurement of thread pitch diameters with thread pitches between 80% and 200% of P and also for a rather broad range of flank angles. Thus, if ideally suited for a flank angle F=60°, the tools will be usable for the flank range between 50° and 80°. For a maximum pitch of 5 mm, R should thus be 0.75 mm (D=1.5 mm). With this radius the measuring blades will be ideal for a pitch of 2.5 mm, but they can be used in the range of P=2-5 mm. Correspondingly, for a corner curvature of 0.375 mm (D=0.75 mm) such a second blade set will be ideal for P=1.25 mm, but usable for the range P=1-2 mm.

The usability at the borders of the said ranges, of course, will be limited by acceptable tolerances as to deviations from the correct measure, but at least in connection with calipers it has been found that the maximum deviations for the above examples will not go beyond the inaccuracy of the caliper itself.

Another surprising fact is that the disclosed attachments are found usable for all common types of threads. Especially for pipe threads it seems that one set of attachments with R=0.5 mm will be sufficient for the entire variation range, except for dimensions 1/16'' and 1/8''. It will of course be possible to design special measuring blades for any special thread, again for effective use over certain deviation ranges all according to the required accuracy.

Because of the almost universal applicability of the basic attachments, it could seem realistic to provide for measuring instruments having the blades as permanent instrument parts, even on micrometers. However, these parts could become damaged, so it will be preferable to use "attachments" anyhow.

In the foregoing reference has been made to measuring "blades", but at least for the measuring of external threads these members could be made with other shaped as long as their projections are as shown in Figs. 8 and 9. For example, the protrusion T3 could be a rotation body. The blades, however, are easy to produce with modern cutting technique.

## Claims

1. A measuring instrument for measuring the pitch diameter of threads, basically based on the measuring wire method and comprising two opposed measuring heads provided with respective thread engaging protrusions (28,30), one measuring head having a single protrusion (30) for insertion into the thread groove at one side of the thread and the other measuring head having two protrusions (28) for riding over the thread ridge at the opposite side of the thread, in contact with the opposite flanks of that ridge, said protrusions (28,30) defining a measuring plane perpendicular to the axis of the thread through the middle of said one protrusion (30), said instrument having display or scale means for indicating the distance between the measuring heads, optionally upon calibration to zero or a known distance, said measuring heads being denominated to suit a specific thread pitch and thread flank angle, with associated indication of acceptable deviations from the nominal values thereof, wherein said protrusions (28,30), seen in direction perpendicular to said measuring plane, are profiled with their thread flank engaging corners rounded with a radius corresponding to or some what smaller than the radius of a circle ideally touching the opposed thread flanks midways between the top and bottom of the nominal thread profile, wherein the width of each of said two protrusions (28) is smaller than the diameter of the said circle, such that the total exterior width of the two, protrusions (28) is less than four times the said radius, and wherein the length dimension of said one protrusion (30) is larger than the diameter of the said circle, while the depth dimension of the notch between the said two protrusions (28) is also larger than the diameter of the said circle.

2. An instrument according to claim 1, in which the protrusions (28,30) are arranged as elongations of planar measuring blades (22).

3. An instrument according to claim 2, in which the measuring blades (22), for accommodating exterior threads, are arranged in a rotational manner in holding means (12) of the respective measuring heads, such that the blades (22) and their protrusions (28,30) generally, will adopt a plane position directly crosswise of the thread.

4. An instrument according to claim 2, in which the measuring blades, for accommodating internal threads, are arranged in a non-rotatable manner on carrier elements (32) laterally projecting from the respective measuring heads, said protrusion (28,30) having reduced thickness relative to the measuring blades.

5. A measuring attachment for mounting on a distance measuring instrument and designed as specified in any of the claims 1 to 4.

6. An attachment according to claim 5, comprising a bush (12) with a threaded throughbore (14) and having a cylindrical depression (16) at one end, a countersunk screw (18,20) projecting from said through bore (14) out through said depression (16), and further comprising one or more measuring blades (22) having a root portion (26) for introduction in said depression (16) and a recess (24) for frictionally accommodating the outer end of the screw (18, 20) to enable the measuring blade (22) to be firmly clamped to the bush (12) by screwing of said screw (18,20).

## Patentansprüche

1. Messgerät zum Messen des Flankendurchmessers von Gewinden, das grundsätzlich auf der Messdrahtmethode basiert und zwei einander entgegengesetzte Messköpfe aufweist, die mit jeweiligen Gewindeeingriffsvorsprüngen (28, 30) versehen sind, wobei ein Messkopf einen einzelnen Vorsprung (30) zum Einführen in die Gewinderille auf einer Seite des Gewindes und der andere Messkopf zwei Vorsprünge (28) zum Bewegen über den Gewinderücken auf der entgegengesetzten Seite des Gewindes in Kontakt mit den einander entgegengesetzten Flanken des Rückens aufweist, wobei die Vorsprünge (28, 30) eine Messebene senkrecht zu der Achse des Gewindes durch die Mitte des einen Vorsprungs (30) hindurch definieren, wobei das Gerät eine Anzeige- oder Skaleneinrichtung zum Anzeigen des Abstandes zwischen den Messköpfen, wahlweise nach Kalibrierung auf null oder einen bekannten Abstand, aufweist, wobei die Messköpfe bezeichnet sind, zu einer bestimmten Gewindesteigung und einem bestimmten Gewindeflankenwinkel zu passen, mit zugehöriger Anzeige von akzeptablen Abweichungen von deren Nennwerten, wobei die Vorsprünge (28, 30), gesehen in einer Richtung senkrecht zu der Messebene, mit Profil versehen sind, wobei ihre Gewindeflanken-Eingriffsecken mit einem Radius gerundet sind, der dem Radius eines Kreises, der die einander entgegengesetzten Flanken auf halbem Wege zwischen der Oberseite und der Unterseite des Nenngewindeprofils ideal berührt, entspricht oder etwas kleiner ist, wobei die Breite jedes der zwei Vorsprünge (28) kleiner als der Durchmesser des Kreises ist, so dass die gesamte äußere Breite der zwei Vorsprünge (30) kleiner als vier mal der Radius ist, und wobei die Längenabmessung des einen Vorsprungs (30) größer als der Durchmesser des Kreises ist, während die Tiefenabmessung der Kerbe zwischen den zwei Vorsprüngen (28) ebenfalls größer als der Durchmesser des Kreises ist.

2. Gerät nach Anspruch 1, bei dem die Vorsprünge (28, 30) als Verlängerungen von ebenen Messzungen (22) eingerichtet sind.

3. Gerät nach Anspruch 1, bei dem die Messzungen (22) zur Anpassung an Außengewinde drehbar in Halteeinrichtungen (12) der jeweiligen Messköpfe angeordnet sind, derart, dass die Zungen (22) und ihre Vorsprünge (28, 30) allgemein eine ebene Lage direkt quer über das Gewinde annehmen.

4. Gerät nach Anspruch 2, bei dem die Messzungen zur Anpassung an Innengewinde nicht drehbar auf Trägerelementen (32) angeordnet sind, die seitlich von den jeweiligen Messköpfen vorstehen, wobei die Vorsprünge (28, 30) relativ zu den Messzungen verminderte Dicke haben.

5. Messzubehör zur Montage auf einem Abstandsmessgerät und gestaltet wie in einem der Ansprüche 1 bis 2 angegeben.

6. Zubehör nach Anspruch 5, das eine Hülse (12) mit einer Gewinde-Durchgangsbohrung (14) und mit einer zylindrischen Vertiefung (16) an einem Ende, eine Senkschraube (18, 20), die durch die Vertiefung (16) hindurch aus der Durchgangsbohrung (14) vorsteht, und weiterhin eine oder mehrere Messzungen (22) mit einem Fußteil (26) zum Einführen in die Vertiefung (16) und einer Aussparung (24) zum reibschlüssigen Aufnehmen des äußeren Endes der Schraube (18, 20), damit die Messzunge (22) durch Festschrauben der Schraube (18, 20) fest an die Hülse (12) geklemmt werden kann, aufweist.

## Revendications

1. Instrument de mesure pour mesurer le diamètre de base sur flancs d'un filet, basé fondamentalement sur la méthode du fil de mesure et comprenant deux têtes de mesure opposées munies de saillies respectives (28, 30) mettant en prise le filet, une tête de mesure ayant une saillie unique (30) destinée à s'insérer dans la gorge du filet d'un côté du filet et l'autre tête de mesure ayant deux saillies (28) pour chevaucher la crête du filet de l'autre côté du filet, en contact avec les flancs opposés de cette crête, lesdites saillies (28, 30) définissant un plan de mesure perpendiculaire à l'axe du filet passant par le milieu de ladite saillie unique (30), ledit instrument ayant des moyens d'affichage ou d'échelle pour indiquer la distance entre les têtes de mesure, en option après calibrage à zéro ou une distance connue, lesdites têtes de mesure étant conçues pour convenir à un diamètre de base à flancs de filet et un angle de flancs de filet donnés, avec indication associée d'écarts acceptables par rapport aux valeurs nominales de celui-ci, dans lequel lesdites saillies (28, 30), en regardant dans une direction perpendiculaire audit plan de mesure, sont profilées avec leurs angles de prise de flancs de filet arrondis suivant un rayon correspondant à ou légèrement inférieur au rayon d'un cercle touchant idéalement les flancs de filet opposés à mi-distance entre le haut et le bas du profil de filet nominal, dans lequel la largeur de chacun desdites deux saillies (28) est inférieure au diamètre dudit cercle, de sorte que la largeur extérieure totale des deux saillies (28) est inférieure à quatre fois ledit rayon, et dans lequel la dimension en longueur de ladite saillie unique (30) est supérieure au diamètre dudit cercle, tandis que la dimension en profondeur de l'encoche entre lesdites deux saillies (28) est également supérieure au diamètre dudit cercle.

2. Instrument selon la revendication 1, dans lequel les saillies (28, 30) sont agencées sous forme d'élongations de lames de mesure planes (22).

3. Instrument selon la revendication 2, dans lequel, pour des filets extérieurs, les lames de mesure (22) sont agencées d'une manière rotative dans des moyens de soutien (12) des têtes de mesure respectives, de sorte que les lames (22) et leurs saillies (28, 30) adoptent de manière générale une position plane directement en travers du filet.

4. Instrument selon la revendication 2, dans lequel, pour des filets intérieurs, les lames de mesure sont agencées d'une manière non-rotative sur des éléments porteurs (32) formant saillie latérale depuis les têtes de mesure respectives, lesdites saillies (28, 30) ayant une épaisseur réduite par rapport aux lames de mesure.

5. Fixation de mesure destiné à se monter sur un instrument de mesure de distance et conçu comme indiqué dans l'une quelconque des revendications 1 à 4.

6. Fixation de mesure selon la revendication 5, comprenant une douille (12) avec un passage fileté (14) et ayant un creux cylindrique (16) à une extrémité, une vis à tête fraisée (18, 20) formant saillie depuis ledit passage (14) à travers ledit creux (16), et comprenant de plus une ou plusieurs lames de mesure (22) ayant une partie de base (26) destinée à être introduite dans le creux (16) et un renfoncement (24) pour recevoir avec frottement l'extrémité extérieure de la vis (18, 20) pour permettre à la lame de mesure (22) d'être serrée fermement sur la douille (12) en vissant ladite vis (18, 20).
